(19) Europäisches Patentamt
European Patent Office
Office européen des brevets

(11) **EP 4 312 095 A1**

(12) **EUROPÄISCHE PATENTANMELDUNG**

(43) Veröffentlichungstag:
**31.01.2024 Patentblatt 2024/05**

(21) Anmeldenummer: **22186660.1**

(22) Anmeldetag: **25.07.2022**

(51) Internationale Patentklassifikation (IPC):
***G05B 19/418*** (2006.01)

(52) Gemeinsame Patentklassifikation (CPC):
**G05B 19/41885; G05B 19/4188;**
G05B 2219/31334; G05B 2219/31393;
G05B 2219/32085

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **Gutknecht, Sandro
53127 Bonn (DE)**

(74) Vertreter: **Siemens Patent Attorneys
Postfach 22 16 34
80506 München (DE)**

(54) **VERFAHREN UND STEUERUNGSPROGRAMM ZUM BETRIEB EINES ENGINEERING-SYSTEMS FÜR EIN INDUSTRIELLES PROZESSAUTOMATISIERUNGSSYSTEM**

(57) In einem Engineering-System für ein industrielles Prozessautomatisierungssystem werden Komponenten des industriellen Prozessautomatisierungssystems jeweils durch ein computerbasiertes Objekt innerhalb des Engineering-Systems (100) repräsentiert und in zumindest einer Server-seitigen Datenbank (103) des Engineering-Systems persistent gespeichert. Für ein Einfügen von mehrere Objektkomponenten (11-13) umfassenden Objekten in einen dreidimensionalen Anlagenplan (2) werden Objektvorlagen (1) bereitgestellt, die jeweils eine dreidimensionale Repräsentierung der Objektkomponenten, einen Lagebezug der Objektkomponenten zu einem Referenzobjekt (10) und eine dreidimensionale Repräsentierung des Referenzobjekts umfassen. Bei einem Einfügen eines auf einer Objektvorlage basierenden Objekts in einen dreidimensionalen Anlagenplan wird eine der jeweiligen Objektvorlage entsprechende Kopie erstellt, die anhand eines Abbilds (10') des Referenzobjekts entsprechend einer durch einen Benutzer vorgebbaren Position und/oder Orientierung dreidimensional im Anlagenplan angeordnet wird.

FIG 1

**Beschreibung**

Die vorliegende Erfindung betrifft ein Verfahren zum Betrieb eines Engineering-Systems für ein industrielles Prozessautomatisierungssystem und eine Steuerungsprogramm, das zur Durchführung des Verfahrens geeignet ist.

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen im wesentlichen selbständigen Betrieb von Steuerungseinrichtungen, Sensoren, Maschinen und technischen Anlagen. Eine wesentliche Grundlage für eine zuverlässige Bereitstellung von Überwachungs-, Steuerungs- und Regelungsfunktionen mittels eines Prozessautomatisierungssystems besteht in einer vollständigen und korrekten Erfassung und Abbildung von Komponenten des industriellen Prozessautomatisierungssystems in einem Engineering- bzw. Projektierungssystem.

Mittels eines Engineering-Systems können insbesondere Steuerungsprogramme für Automatisierungsgeräte projektiert werden, die zur Visualisierung eines Abbilds einer technischen Anlage oder einer komplexen Maschine und deren Steuerung bzw. Regelung vorgesehen sind. Zur Laufzeit der Steuerungsprogramme bzw. während eines Runtime-Betriebs wird ein technischer Prozess durch Automatisierungsgeräte, wie speicherprogrammierbare Steuerungen, gesteuert bzw. geregelt. Im Rahmen einer Prozessüberwachung während des Runtime-Betriebs kann eine Bedienperson Prozessbilder aufrufen, um einen Überblick über einen aktuellen Anlagenzustand zu erhalten sowie eine Prozessführung bzw. -bedienung wahrzunehmen.

Aus EP 2 808 749 B1 ist ein Verfahren zum Austausch von Steuerungsinformationen zwischen Bedien- und Beobachtungsgeräten eines industriellen Automatisierungssystems bekannt. Anhand der Steuerungsinformationen wird ein zumindest ausschnittweises Abbild einer mittels Automatisierungsgeräten geregelten oder gesteuerten technischen Anlage an einer graphischen Benutzerschnittstelle eines jeweiligen Bedien- und Beobachtungsgeräts visualisiert. Dem visualisierten Abbild sind Elemente der technischen Anlage repräsentierende computerbasierte Objekte zugeordnet, die durch eine auf einem jeweiligen Bedien- und Beobachtungsgerät eingerichtete Laufzeitumgebung bereitgestellt werden. Sämtliche an unterschiedlichen Bedien-und Beobachtungsgeräten bereitgestellten Objekttypen werden entsprechend einem einheitlichen Adressierungsschema für einen geräteübergreifenden Zugriff verfügbar gemacht.

In EP 3 364 257 A1 ist ein Engineering-System für ein industrielles Prozessautomatisierungssystem beschrieben, bei dem Komponenten des industriellen Prozessautomatisierungssystems jeweils durch ein computerbasiertes Objekt repräsentiert und in zumindest einer Server-seitigen Datenbank persistent gespeichert werden. Durch eine Benutzerselektion vorgegebene Objekte werden für eine Bearbeitung aus der Datenbank in zumindest einen Bearbeitungsspeicherbereich geladen. Bei Einleitung einer Benutzerfreigabe von in einen ausgewählten Bearbeitungsspeicherbereich geladenen freizugebenden Objekten wird überprüft, ob ein direkt vorrangiger Bearbeitungsspeicherbereich vorhanden ist. Für in den ausgewählten Bearbeitungsspeicherbereich geladene freigebbare Objekte werden bei einem positiven Überprüfungsergebnis direkte Vorgänger im vorrangigen Bearbeitungsspeicherbereich ermittelt und zu den freigebbaren Objekten hinzugefügt. Unter den freigebbaren Objekten werden zu freizugebenden Objekten hierarchisch untergeordnete Objekte ermittelt und zur Freigabe gekennzeichnet. Die zur Freigabe gekennzeichneten Objekte werden durch Änderung ihrer Zuordnung aus dem ausgewählten Benutzerspeicherbereich in den vorrangigen Benutzerspeicherbereich verschoben.

EP 3 571 555 B1 betrifft ein Engineering-System für ein industrielles Prozessautomatisierungssystem, bei dem Komponenten des industriellen Prozessautomatisierungssystems jeweils durch ein computerbasiertes Objekt innerhalb des Engineering-Systems repräsentiert und in zumindest einer Server-seitigen Engineering-Datenbank persistent gespeichert werden. Funktionen des Engineering-Systems werden als Dienste über eine Server-seitige einheitliche Dienstschnittstelle verfügbar gemacht. Auf in der Engineering-Datenbank gespeicherte Objekte gerichtete Client-seitige Such- bzw. Bearbeitungsanfragen werden über eine separate Server-seitige Auftragsschnittstelle an einen Auftragsbearbeitungsdienst weitergeleitet. Prozessabläufe zur Bearbeitung von Such- bzw. Bearbeitungsanfragen werden mittels Auftragsbearbeitungsobjekten spezifiziert, die in einer separaten Auftragsdatenbank gespeichert werden.

Aus EP 3 690 575 B1 ist ein Verfahren zur Überprüfung einer konsistenten Erfassung von Rohrleitungen bekannt, die in einem ersten Plan zweidimensional und in einem zweiten Plan dreidimensional erfasst sind. Für in beiden Plänen erfasste Rohrleitungen wird jeweils zumindest ein Hauptpfad innerhalb des jeweiligen Plans ermittelt. Dabei werden für die erfassten Hauptpfade innerhalb beider Pläne jeweils miteinander zu vergleichende Sequenzen von Objekten ermittelt, die Leitungskomponenten, Abzweige bzw. Anschlüsse umfassen. Aus den zu vergleichenden Sequenzen werden jeweils Objekte ohne gegenseitige Entsprechung eliminiert, die nur in einem der beiden Pläne bzw. nur in einem Hauptpfad eines der beiden Pläne erfasst sind. Danach werden innerhalb der zu vergleichenden Sequenzen iterativ Objekte mit unterschiedlicher Reihenfolge ermittelt und klassifiziert, die hinsichtlich ihrer Reihenfolge innerhalb der zu vergleichenden Sequenzen eine maximale Reihenfolgedifferenz aufweisen. Dies wird fortgesetzt, bis alle nach Klassifizierung verbleibenden Objekte hinsichtlich ihrer Reihenfolge innerhalb der zu vergleichenden Sequenzen keine Reihenfolgedifferenz aufweisen.

In Engineering-Systemen werden häufig verwendete Objekte, insbesondere Dokumente und Daten, oft in Form von Templates bzw. Objektvorlagen zusammengefasst, die in Anlagenplänen für Engineering-Zwecke genutzt und mit bestehenden Planungselementen kombiniert werden können. Solange hierbei zweidimensionale Anlagenpläne und Dokumente bzw. Daten genutzt werden, können Daten aus Objektvorlagen relativ einfach in einen Anlagenplan kopiert bzw. übernommen werden. Für sämtliche Objekte ist dabei nämlich lediglich deren zweidimensionale Position und Orientierung (Winkel) zu berücksichtigen. Bei dreidimensionalen Anlagenplänen und Dokumenten bzw. Daten ist dies dagegen aufgrund einer zusätzlichen Tiefenebene und einer Orientierung in der Tiefenebene komplizierter. Bisher wird diese Problematik dadurch umgegangen, dass dreidimensionale Anlagenpläne und Dokumente bzw. Daten auf zwei zueinander orthogonale zweidimensionale Sichten projiziert werden. Dementsprechend ist hierfür eine Transformation dreidimensionaler Daten auf zweidimensionale Daten und eine Erzeugung von zwei zweidimensionalen Sichten erforderlich. Dies führt bei einem Engineering zu zusätzlichen Berechnungsaufwänden und zu einem schwierigeren Identifizieren von Objekten, die in den zweidimensionalen Sichten in mehreren Ebenen hintereinander liegen.

Der vorliegenden Erfindung liegt die Aufgabe zugrunde, ein effizientes Verfahren zum Betrieb eines Engineering-Systems für ein industrielles Prozessautomatisierungssystem zu schaffen, das eine einfache und effiziente Übernahme von Daten aus mehrere Objektkomponenten umfassenden Objektvorlagen in einen dreidimensionalen Anlagenplan ermöglicht, und ein Steuerungsprogramm zu dessen Implementierung anzugeben.

Diese Aufgabe wird erfindungsgemäß durch ein Verfahren mit den in Anspruch 1 angegebenen Merkmalen und durch ein Steuerungsprogramm mit den in Anspruch 13 angegebenen Merkmalen gelöst.

Entsprechend dem erfindungsgemäßen Verfahren zum Betrieb eines Engineering-Systems für ein industrielles Prozessautomatisierungssystem werden Komponenten des industriellen Prozessautomatisierungssystems jeweils durch ein computerbasiertes Objekt innerhalb des Engineering-Systems repräsentiert und in zumindest einer Serverseitigen Datenbank des Engineering-Systems persistent gespeichert. Die Objekte werden Server-seitig innerhalb einer hierarchischen Objektstruktur mit mehreren Hierarchieebenen verwaltet. Dabei umfasst die Objektstruktur Abhängigkeiten zwischen Objekten bzw. Objektkomponenten.

Für ein Einfügen von mehrere Objektkomponenten umfassenden Objekten in einen dreidimensionalen Anlagenplan werden Objektvorlagen bereitgestellt, die erfindungsgemäß jeweils eine dreidimensionale Repräsentierung der Objektkomponenten, einen Lagebezug der Objektkomponenten zu einem Referenzobjekt und eine dreidimensionale Repräsentierung des Referenzobjekts umfassen. Vorteilhafterweise werden Objektvorlagen in einer Objektbibliothek des Engineering-Systems verwaltet.

Bei einem Einfügen eines auf einer Objektvorlage basierenden Objekts in einen dreidimensionalen Anlagenplan wird eine der jeweiligen Objektvorlage entsprechende Kopie erstellt, die erfindungsgemäß anhand eines Abbilds des Referenzobjekts entsprechend einer durch einen Benutzer vorgebbaren Position bzw. Orientierung dreidimensional im Anlagenplan angeordnet wird. Dabei werden Abbilder der Objektkomponenten entsprechend dem Lagebezug zum Referenzobjekt im Anlagenplan positioniert.

Mit der vorliegenden können mehrere Objektkomponenten umfassende Objekte anhand des Referenzobjekts schnell und präzise in einem dreidimensionalen Anlagenplan positioniert werden. Insbesondere ist hierfür keine Umrechnung von dreidimensionalen Koordinationen in zweidimensionale Koordinaten für eine Positionierung des jeweiligen Objekts über zweidimensionale Sichten erforderlich. Dies bewirkt einerseits eine Verringerung von Rechenaufwand und andererseits eine erhöhte Genauigkeit der Positionierung auf Grundlage nativer Daten.

Vorzugsweise werden bei einem Einfügen eines auf einer Objektvorlage basierenden Objekts in den Anlagenplan zunächst nur Umrisse der Objektkomponenten in einer Vorschau dargestellt. Nach einer abgeschlossenen Anordnung des jeweiligen Objekts im Anlagenplan wird das Referenzobjekt aus dessen Darstellung ausgefiltert. Eine Darstellung der Vorschau wird nach der Anordnung des jeweiligen Objekts im Anlagenplan beendet. Dies ermöglicht eine besonders benutzerfreundliche Handhabung eines Einfügens neuer Objekte in einen Anlagenplan auf Basis von Objektvorlagen.

Der Lagebezug der Objektkomponenten zum Referenzobjekt umfasst insbesondere jeweils eine relative Position bzw. Orientierung der jeweiligen Objektkomponente zum jeweiligen Referenzobjekt. Vorzugsweise wird aus dem Referenzobjekt und dessen Abbild im Anlagenplan eine Abbildung des jeweiligen auf einer Objektvorlage basierenden Objekts in den Anlagenplan ermittelt. Dabei werden die Abbilder der Objektkomponenten auf Basis der ermittelten Abbildung dreidimensional im Anlagenplan angeordnet werden. Dies ermöglicht eine besonders genaue und schnelle Berechnung einer Anordnung der Objektkomponenten im Anlagenplan durch einheitliche Bezugnahme auf die Abbildung des Referenzobjekts auf sein Abbild im Anlagenplan.

Entsprechend einer besonders bevorzugten Ausgestaltung der vorliegenden Erfindung werden eine Position und Orientierung des Referenzobjekts innerhalb eines Objekt-individuellen Koordinatensystems durch eine vierdimensionale Matrix spezifiziert. Diese vierdimensionale Matrix umfasst eine die Orientierung des Referenzobjekts kennzeichnende dreidimensionale Matrix, einen die Position des Referenzobjekts innerhalb des Objekt-individuellen Koordinatensystems kennzeichnenden Verschiebungsvektor und einen transponierten Nullvektor. Dementsprechend werden auch eine Position und Orientierung des Abbilds des Referenzobjekts im Anlagenplan durch eine vierdimensionale Matrix spezifiziert. Diese vierdimensionale Matrix umfasst eine die Orientierung des Abbilds innerhalb des Anlagenplans kennzeichnende dreidimensionale Matrix, einen die Position des Abbilds innerhalb des Anlagenplans kennzeichnenden Verschiebungsvektor und einen transponierten Nullvektor.

Darüber hinaus werden vorzugsweise auch eine Position und Orientierung der Objektkomponenten innerhalb des Objekt-individuellen Koordinatensystems jeweils durch eine vierdimensionale Matrix spezifiziert. Analog zu obigen Ausführungen umfasst auch diese vierdimensionale Matrix eine die Orientierung der jeweiligen Objektkomponente kennzeichnende dreidimensionale Matrix, einen die Position der jeweiligen Objektkomponente innerhalb des Objekt-individuellen Koordinatensystems kennzeichnenden Verschiebungsvektor und einen transponierten Nullvektor. Dementsprechend werden auch eine Position und Orientierung von Abbildern der Objektkomponenten im Anlagenplan jeweils durch eine vierdimensionale Matrix spezifiziert werden, die eine die Orientierung des jeweiligen Abbilds innerhalb des Anlagenplans kennzeichnende dreidimensionale Matrix, einen die Position des jeweiligen Abbilds innerhalb des Anlagenplans kennzeichnenden Verschiebungsvektor und einen transponierten Nullvektor umfasst.

Mit obigen Voraussetzungen kann die Abbildung des jeweiligen auf einer Objektvorlage basierenden Objekts in den Anlagenplan vorteilhafterweise durch eine vierdimensionale Matrix, insbesondere eine erweiterte Abbildungsmatrix, spezifiziert werden, die eine dreidimensionale Matrix für eine lineare Transformation, insbesondere Drehung, einen Verschiebungsvektor und transponierten Nullvektor umfasst. Dabei wird die vierdimensionale Matrix für die Abbildung als Produkt aus einer invertierten vierdimensionalen Matrix für das Referenzobjekt und aus der vierdimensionalen Matrix für das Abbild des Referenzobjekts berechnet. Dies ermöglicht eine aufwandsarme und schnelle Ermittlung einer einheitlichen Abbildungsmatrix für sämtliche Objektkomponenten. Insbesondere kann aus einem Produkt der vierdimensionalen Matrix für die Abbildung und der vierdimensionalen Matrix für die jeweilige Objektkomponente jeweils die vierdimensionale Matrix für das Abbild der jeweiligen Objektkomponente im Anlagenplan berechnet werden.

Entsprechend einer vorteilhaften Ausgestaltung der vorliegenden Erfindung weisen auf Objektvorlagen basierende Objekte jeweils eine hierarchische, die jeweiligen Objektkomponenten umfassende Objektstruktur auf. Bei einem Einfügen eines auf einer Objektvorlage basierenden Objekts in den Anlagenplan kann damit eine Kopie der jeweiligen Objektkomponenten im Anlagenplan mit derselben hierarchischen Objektstruktur wie in der jeweiligen Objektvorlage erstellt werden. Auf diese Weise werden sämtliche planungsrelevanten Daten konsistent aus der jeweiligen Objektvorlage in den Anlagenplan übernommen.

Darüber hinaus werden auf Objektvorlagen basierende Objekte bei einem Einfügen in den Anlagenplan vorzugsweise jeweils an bestehenden Objekten im Anlagenplan ausgerichtet bzw. an diesen angeordnet werden, sofern ein vorgegebener Abstandsschwellwert unterschritten wird. Dabei bleibt eine hierarchische Objektstruktur eines eingefügten Objekts bei einem Ausrichten bzw. Anordnen an bestehenden Objekten unverändert bleibt. Hierdurch ist ein komfortables Positionieren von Objekten im Anlagenplan möglich, ohne dabei eine Konsistenz aus der jeweiligen Objektvorlage in den Anlagenplan übernommener Daten nachteilig zu beeinflussen.

Zur Sicherstellung einer Bearbeitung auf einer Objektvorlage basierender Objekte mit definierten bzw. zulässigen Funktionen werden auf Objektvorlagen basierende Objekte jeweils mit einer Funktion zur Erstellung einer Vorschau bei einem Einfügen des jeweiligen Objekts in den Anlagenplan, mit einer Funktion zur Transformation des jeweiligen Objekts in den Anlagenplan entsprechend der durch einen Benutzer vorgebbaren Position bzw. Orientierung und mit einer Funktion zur Rückabwicklung eines Einfügevorgangs gekapselt. Dabei wird die Funktion zur Erstellung der Vorschau bei Erstellung einer der jeweiligen Objektvorlage entsprechenden Kopie ausgeführt, während die Funktion zur Transformation bei Positionierung der jeweiligen Objektkomponenten im Anlagenplan ausgeführt wird. Dabei kann die Vorschau grundsätzlich auch in zumindest einer zweidimensional Ansicht gerendert werden. Vorteilhafterweise wird die Funktion zur Rückabwicklung wird bei einem Löschen eines auf einer Objektvorlage basierenden Objekts aus dem Anlagenplan ausgeführt. Somit ist durch obige Funktionen stets ein definiertes Bearbeitungsergebnis gewährleistet.

Das erfindungsgemäße Steuerungsprogramm ist zur Implementierung eines Verfahrens entsprechend vorangehenden Ausführungen vorgesehen und in einen Arbeitsspeicher eines Rechners ladbar. Dabei weist das Steuerungsprogramm zumindest einen Codeabschnitt auf, bei dessen Ausführung Komponenten des industriellen Prozessautomatisierungssystems jeweils durch ein computerbasiertes Objekt innerhalb des Engineering-Systems repräsentiert und in zumindest einer Server-seitigen Datenbank des Engineering-Systems persistent gespeichert werden. Außerdem werden die Objekte Server-seitig innerhalb einer hierarchischen Objektstruktur mit mehreren Hierarchieebenen verwaltet. Dabei umfasst die Objektstruktur Abhängigkeiten zwischen Objekten bzw. Objektkomponenten.

Darüber hinaus werden bei Ausführung des obigen Codeabschnitts für ein Einfügen von mehrere Objektkomponenten umfassenden Objekten in einen dreidimensionalen Anlagenplan Objektvorlagen bereitgestellt, die jeweils eine dreidimensionale Repräsentierung der Objektkomponenten, einen Lagebezug der Objektkomponenten zu einem Referenzobjekt und eine dreidimensionale Repräsentierung des Referenzobjekts umfassen. Erfindungsgemäß wird bei einem Einfügen eines auf einer Objektvorlage basierenden Objekts in einen dreidimensionalen Anlagenplan eine der jeweiligen Objektvorlage entsprechende Kopie erstellt, die anhand eines Abbilds des Referenzobjekts entsprechend einer durch einen Benutzer vorgebbaren Position bzw. Orientierung dreidimensional im Anlagenplan angeordnet wird, wenn das Steuerungsprogramm im Rechner abläuft. Dabei werden Abbilder der Objektkomponenten entsprechend dem Lagebezug zum Referenzobjekt im Anlagenplan positioniert.

Die vorliegende Erfindung wird nachfolgend an einem Ausführungsbeispiel anhand der Zeichnung näher erläutert. Es zeigt

Figur 1    eine dreidimensionale Ansicht einer Objektvorlage für ein mehrere Objektkomponenten umfassendes Objekt innerhalb eines Engineering-Systems für ein industrielles Prozessautomatisierungssystem,

Figur 2    eine Ausrichtung eines von der Objektvorlage gemäß Figur 1 umfassten Referenzobjekts an einem bestehenden Objekt innerhalb eines mittels des Engineering-System bearbeitbaren Anlagenplans,

Figur 3    eine zweidimensionale Vorschau eines mittels des Referenzobjekts gemäß Figur 2 innerhalb des Anlagenplans positionierten Objekts,

Figur 4    das anhand des Referenzobjekts gemäß Figur 2 innerhalb des Anlagenplans positionierte Objekt.

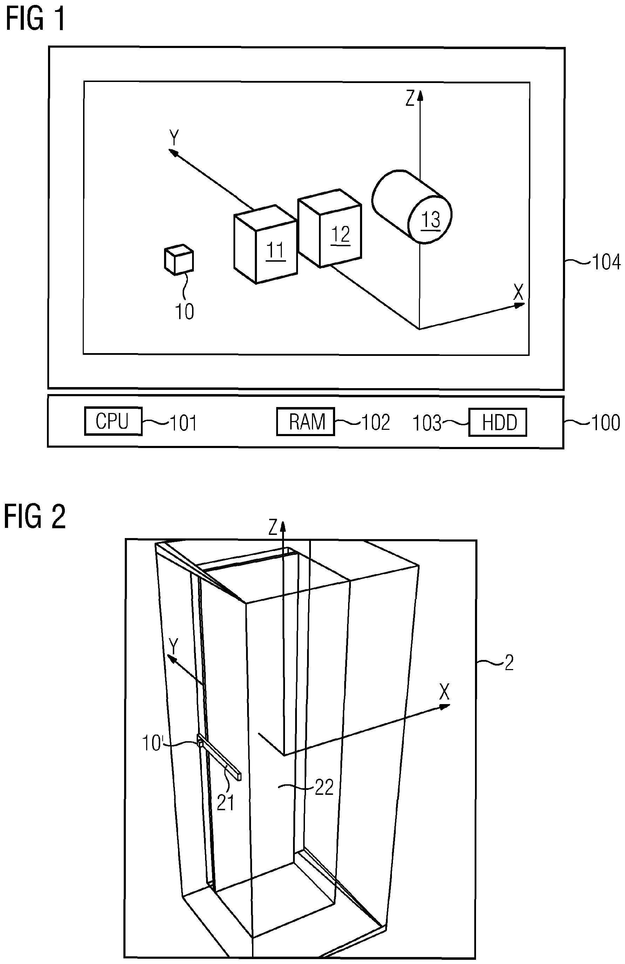

Entsprechend Figur 1 werden Komponenten eines industriellen Prozessautomatisierungssystems repräsentierende Objekte mittels eines rechnerbasierten Engineering-Systems, das zumindest einen Rechner 100 bzw. Computer und ein Steuerungsprogramm umfasst, dreidimensional erfasst. Das Steuerungsprogramm ist persistent in einem nichtflüchtigen Speicher 103 des Rechners 100 gespeichert und in dessen Arbeitsspeicher 102 ladbar und weist zumindest einen Codeabschnitt auf, bei dessen Verarbeitung durch einen Prozessor 101 des Rechners 100 nachfolgend beschriebene Schritte ausgeführt werden, wenn das Steuerungsprogramm im Rechner 100 abläuft.

Grundsätzlich werden sämtliche Komponenten des industriellen Prozessautomatisierungssystems jeweils durch ein computerbasiertes Objekt repräsentiert und in zumindest einer Server-seitigen Datenbank bzw. im Speicher 103 des Engineering-Systems persistent gespeichert. Die Objekte werden Server-seitig innerhalb einer hierarchischen Objektstruktur mit mehreren Hierarchieebenen verwaltet. Dabei umfasst die Objektstruktur Abhängigkeiten zwischen Objekten.

Bei einer Bearbeitung von Objekten in Arbeitsschichten an einer grafischen Benutzerschnittstelle 104 des Rechners 100 bleibt eine originäre Datenbasis einer technischen Anlage vorzugsweise bis auf weiteres unverändert. Erst nach Bearbeitung werden vorgenommene Änderungen der Objekte im Rahmen eines Freigabe-Prozesses mit der originären Datenbasis konsolidiert und in einen operativ genutzten Produktivdatenbestand der Anlage freigegeben.

Durch eine Benutzerselektion vorgegebene Objekte werden im vorliegenden Ausführungsbeispiel für eine Bearbeitung aus der Server-seitigen Datenbank 103 des Engineering-Systems 100 lesend und schreibend in zumindest eine Arbeitsschicht geladen. Dabei ist den Objekten und der Arbeitsschicht jeweils genau ein zugriffsberechtigter Benutzer bzw. Eigentümer zugeordnet. Zusätzlich zu den aus der Datenbank 103 geladenen Objekten sind in einer Arbeitsschicht neue Objekte erzeugbar.

Für ein Einfügen von mehrere Objektkomponenten umfassenden Objekten in einen dreidimensionalen Anlagenplan werden Objektvorlagen bereitgestellt. In Figur 1 ist eine exemplarische Objektvorlage 1 dargestellt, die eine dreidimensionale Repräsentierung für jede Objektkomponente 11-13, einen Lagebezug der Objektkomponenten zu einem Referenzobjekt 10 und eine dreidimensionale Repräsentierung des Referenzobjekts 10 umfasst. Dabei kann der Lagebezug der Objektkomponenten 11-13 zum Referenzobjekt 10 beispielsweise jeweils durch eine relative Position und Orientierung der jeweiligen Objektkomponente 11-13 zum Referenzobjekt 10 ausgedrückt werden. Alternativ dazu kann der Lagebezug auch Differenzen zwischen Absolutwerten für Position und Orientierung spezifiziert werden. Vorteilhafterweise werden Objektvorlagen in einer Objektbibliothek des Engineering-Systems verwaltet.

Im vorliegenden Ausführungsbeispiel werden eine Position und Orientierung des Referenzobjekts 10 innerhalb eines Objekt-individuellen Koordinatensystems durch eine vierdimensionale Matrix $A_0$ spezifiziert, die eine die Orientierung des Referenzobjekts 10 kennzeichnende dreidimensionale Matrix $P_0$, einen die Position des Referenzobjekts 10 innerhalb des Objekt-individuellen Koordinatensystems kennzeichnenden Verschiebungsvektor $t_0$ und einen transponierten Nullvektor $0^T$ umfasst. Diese vierdimensionale Matrix $A_0$ wird entlang ihrer Hauptachse durch ein Element mit Wert 1 ergänzt. Das Objektindividuelle Koordinatensystem umfasst insbesondere eine x-Achse, eine y-Achse und eine z-Achse sowie einen individuellen Koordinatenursprung.

Die vierdimensionale Matrix $A_0$ für das in Figur 1 dargestellte Referenzobjekt 10 kann beispielsweise folgenden Inhalt haben:

$$A_0 = \begin{pmatrix} P_0 & t_0 \\ 0^T & 1 \end{pmatrix} = \begin{pmatrix} 1 & 0 & 0 & 200 \\ 0 & 1 & 0 & 720 \\ 0 & 0 & 1 & 1640 \\ 0 & 0 & 0 & 1 \end{pmatrix}$$

In analoger Weise werden eine Position und Orientierung der Objektkomponenten 11-13 innerhalb des Objekt-individuellen Koordinatensystems jeweils durch eine vierdimensionale Matrix $A_1$, $A_2$, $A_3$ spezifiziert, die eine die Orientierung der jeweiligen Objektkomponente 11-13 kennzeichnende dreidimensionale Matrix $P_1$, $P_2$, $P_3$, einen die Position der jeweiligen Objektkomponente innerhalb des Objekt-individuellen Koordinatensystems kennzeichnenden Verschiebungsvektor $t_1$, $t_2$, $t_3$ und einen transponierten Nullvektor $0^T$ umfasst. Auch hier wird die jeweilige vierdimensionale Matrix $A_1$, $A_2$, $A_3$ entlang ihrer Hauptachse durch ein Element mit Wert 1 ergänzt.

Beispielsweise hat die vierdimensionale Matrix $A_1$ für eine in Figur 1 dargestellte erste Objektkomponente 11 folgenden Inhalt:

$$A_1 = \begin{pmatrix} P_1 & t_1 \\ 0^T & 1 \end{pmatrix} = \begin{pmatrix} 1 & 0 & 0 & 280 \\ 0 & 1 & 0 & 720 \\ 0 & 0 & 1 & 1640 \\ 0 & 0 & 0 & 1 \end{pmatrix}$$

Die erste Objektkomponente 11 ist also entlang der x-Achse um den Wert 80 im Vergleich zum Referenzobjekt 10 verschoben, weist aber ansonsten dieselbe Orientierung auf. Weder das Referenzobjekt 10 noch die erste Objektkomponente 11 sind im vorliegenden Ausführungsbeispiel um die x-Achse, die y-Achse oder um die z-Achse gedreht. Würde die erste Objektkomponente 11 beispielsweise eine Orientierung mit einer 90°-Drehung im Gegenuhrzeigersinn (mathematisch positive Drehrichtung) um die z-Achse aufweisen, könnte dies durch die dreidimensionale Matrix $P_1$ dargestellt werden:

$$P_1 = \begin{pmatrix} 0 & 1 & 0 \\ -1 & 0 & 0 \\ 0 & 0 & 1 \end{pmatrix}$$

In Figur 2 ist ein Einfügen eines auf der Objektvorlage 1 gemäß Figur 1 basierenden Objekts in einen dreidimensionalen Anlagenplan 2 dargestellt. Dabei wird eine der jeweiligen Objektvorlage 1 entsprechende Kopie erstellt, die anhand eines Abbilds 10' des Referenzobjekts 10 entsprechend einer durch einen Benutzer vorgebbaren Position bzw. Orientierung dreidimensional im Anlagenplan 2 angeordnet wird. Dabei werden Abbilder 11'-13' der Objektkomponenten 11-13 entsprechend dem Lagebezug zum Referenzobjekt 10 im Anlagenplan 2 positioniert. Im vorliegenden Ausführungsbeispiel weisen auf Objektvorlagen basierende Objekte jeweils eine hierarchische, die jeweiligen Objektkomponenten 11-13 umfassende Objektstruktur auf. Bei einem Einfügen eines auf einer Objektvorlage basierenden Objekts in den Anlagenplan 2 wird dementsprechend eine Kopie der jeweiligen Objektkomponenten 11-13 im Anlagenplan 2 mit derselben hierarchischen Objektstruktur wie in der jeweiligen Objektvorlage 1 erstellt.

Insbesondere können auf Objektvorlagen basierende Objekte bei einem Einfügen in den Anlagenplan 2 jeweils an bestehenden Objekten 21-22 im Anlagenplan 2, wie einem Trägerelement 21 eines Schaltschranks oder einer Seitenwand 22 des Schaltschranks, ausgerichtet bzw. mittels Einrastfunktionen an diesen angeordnet werden, sofern ein vorgegebener Abstandsschwellwert unterschritten wird. Bei einem Ausrichten bzw. Anordnen an bestehenden Objekten 21-22 bleibt eine hierarchische Objektstruktur eines eingefügten Objekts vorzugsweise unverändert.

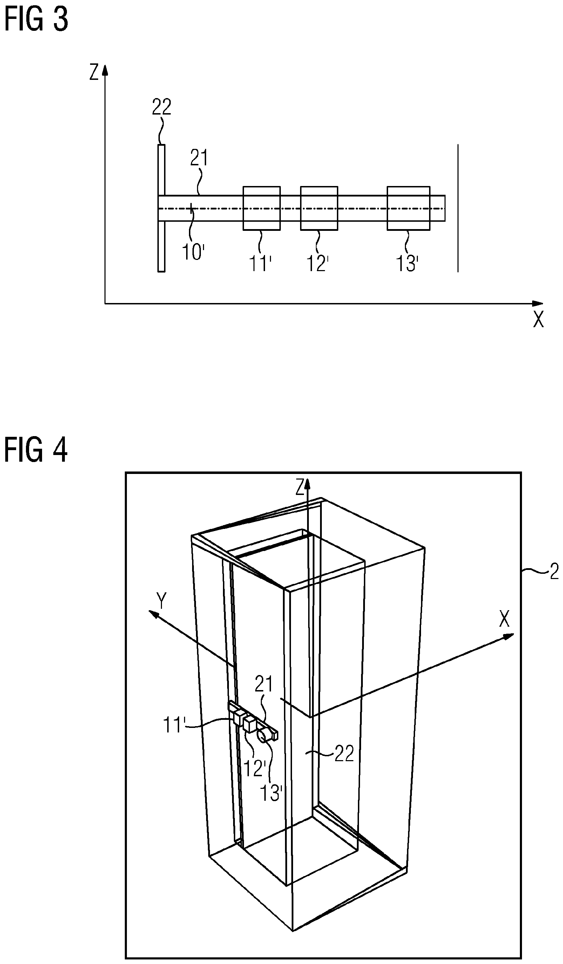

Wenn ein auf einer Objektvorlage basierendes Objekt in den Anlagenplan 2 eingefügt wird, werden beispielsweise zunächst nur Umrisse der Abbilder 11'-13' der Objektkomponenten 11-13 in einer Vorschau dargestellt. Alterativ oder zusätzlich zu einer dreidimensionalen Vorschau ist es grundsätzlich möglich, dass die Vorschau in zumindest einer zweidimensionalen Ansicht gerendert wird, wie dies in Figur 3 dargestellt ist. Dabei können die Umrisse der Abbilder 11'-13' der Objektkomponenten 11-13 überlagert zu den bestehenden Objekten 21-22 im Anlagenplan 2 dargestellt werden.

Entsprechend Figur 4 wird das Abbild 10' des Referenzobjekts 10 nach einer abgeschlossenen Anordnung des jeweiligen Objekts im Anlagenplan 2 vorteilhafterweise aus dessen Darstellung ausgefiltert. Außerdem wird eine Darstellung der Vorschau nach der Anordnung des jeweiligen Objekts im Anlagenplan 2 beendet. Somit werden im vorliegenden Ausführungsbeispiel nach der abgeschlossenen Anordnung des jeweiligen Objekts die Abbilder 11'-13' der Objektkomponenten 11-13 zusammen mit den bereits zuvor bestehenden Objekten 21-22 im Anlagenplan 2 dargestellt.

Vorzugsweise wird aus dem Referenzobjekt 10 und dessen Abbild 10' im Anlagenplan 2 eine Abbildung des jeweiligen auf einer Objektvorlage basierenden Objekts in den Anlagenplan 2 ermittelt. Auf Basis der ermittelten Abbildung werden die Abbilder 11'-13' der Objektkomponenten 11-13 dreidimensional im Anlagenplan 2 angeordnet. Für eine Ermittlung der Abbildung werden vorteilhafterweise auch eine Position und Orientierung des Abbilds 10' des Referenzobjekts 10 im Anlagenplan 2 durch eine vierdimensionale Matrix $A_0'$ spezifiziert, die eine die Orientierung des Abbilds 10' innerhalb des Anlagenplans 2 kennzeichnende dreidimensionale Matrix $P_0$', einen die Position des Abbilds 10' innerhalb des Anlagenplans 2 kennzeichnenden Verschiebungsvektor $t_0$' und einen transponierten Nullvektor $0^T$ umfasst.

Die vierdimensionale Matrix $A_0$' für das in Figur 2 dargestellte Abbild 10' des Referenzobjekt 10 hat aufgrund der im vorliegenden Ausführungsbeispiel durch einen Benutzer vorgebbaren Position bzw. Orientierung folgenden Inhalt:

$$A_0' = \begin{pmatrix} P_0' & t_0' \\ 0^T & 1 \end{pmatrix} = \begin{pmatrix} 0 & 1 & 0 & 72{,}5 \\ -1 & 0 & 0 & 600 \\ 0 & 0 & 1 & 1080 \\ 0 & 0 & 0 & 1 \end{pmatrix}$$

Ersichtlich wird das Abbild 10' des Referenzobjekts 10 im Anlagenplan 2 insbesondere um 90° im Gegenuhrzeigersinn gedreht gegenüber dem Referenzobjekt 10 im Objekt-individuellen Koordinatensystem angeordnet.

Analog zu obigen Ausführungen wird auch die Abbildung des jeweiligen auf einer Objektvorlage basierenden Objekts in den Anlagenplan 2 durch eine vierdimensionale Matrix T spezifiziert, die eine dreidimensionale Matrix $P_T$ für eine lineare Transformation, insbesondere Drehung, einen Verschiebungsvektor $t_T$ und transponierten Nullvektor $0^T$ umfasst. Dabei wird die vierdimensionale Matrix **T** für die Abbildung als Produkt aus einer invertierten vierdimensionalen Matrix $A_0^{-1}$ für das Referenzobjekt 10 und aus der vierdimensionalen Matrix $A_0$' für das Abbild 10' des Referenzobjekts 10 wie nachstehend dargestellt berechnet.

$$T = \begin{pmatrix} P_T & t_T \\ 0^T & 1 \end{pmatrix} = A_0^{-1} \cdot A_0'$$

$$= \begin{pmatrix} 1 & 0 & 0 & -200 \\ 0 & 1 & 0 & -720 \\ 0 & 0 & 1 & -1640 \\ 0 & 0 & 0 & 1 \end{pmatrix} \begin{pmatrix} 0 & 1 & 0 & 72{,}5 \\ -1 & 0 & 0 & 600 \\ 0 & 0 & 1 & 1080 \\ 0 & 0 & 0 & 1 \end{pmatrix} = \begin{pmatrix} 0 & 1 & 0 & -647{,}5 \\ -1 & 0 & 0 & 800 \\ 0 & 0 & 1 & -560 \\ 0 & 0 & 0 & 1 \end{pmatrix}$$

Dementsprechend wird aus einem Produkt der vierdimensionalen Matrix **T** für die Abbildung und der vierdimensionalen Matrix $A_1$, $A_2$, $A_3$ für die jeweilige Objektkomponente 11-13 jeweils eine vierdimensionale Matrix $A_1$', $A_2$', $A_3$' für das Abbild 11'-13' der jeweiligen Objektkomponente im Anlagenplan 2 berechnet. Analog zu obigen Ausführungen umfasst die vierdimensionale Matrix $A_1$', $A_2$', $A_3$' für das Abbild 11'-13' der jeweiligen Objektkomponente 11-13 eine die Orientierung des jeweiligen Abbilds innerhalb des Anlagenplans kennzeichnende dreidimensionale Matrix $P_1$', $P_2$', $P_3$', einen die Position des jeweiligen Abbilds innerhalb des Anlagenplans 2 kennzeichnenden Verschiebungsvektor $t_1$', $t_2$', $t_3$' und einen transponierten Nullvektor $0^T$.

Für das Abbild 11' der ersten Objektkomponente 11 ergibt sich beispielsweise folgende vierdimensionale Matrix $A_1$':

$$A_1' = \begin{pmatrix} P_1' & t_1' \\ 0^T & 1 \end{pmatrix} = T \cdot A_1$$

$$= \begin{pmatrix} 0 & 1 & 0 & -647{,}5 \\ -1 & 0 & 0 & 800 \\ 0 & 0 & 1 & -560 \\ 0 & 0 & 0 & 1 \end{pmatrix} \begin{pmatrix} 1 & 0 & 0 & 200 \\ 0 & 1 & 0 & 720 \\ 0 & 0 & 1 & 1640 \\ 0 & 0 & 0 & 1 \end{pmatrix} = \begin{pmatrix} 0 & 1 & 0 & 72{,}5 \\ -1 & 0 & 0 & 520 \\ 0 & 0 & 1 & 1080 \\ 0 & 0 & 0 & 1 \end{pmatrix}$$

Das Abbild der ersten Objektkomponente 11' ist also entlang der y-Achse um den Wert -80 im Vergleich zum Abbild 10' des Referenzobjekts 10 verschoben und weist ansonsten dieselbe Orientierung wie das Abbild 10' des Referenzobjekts 10 auf. Sowohl das Abbild 10' des Referenzobjekts 10 als auch das Abbild 11' der ersten Objektkomponente 11 sind im vorliegenden Ausführungsbeispiel 90° im Gegenuhrzeigersinn um die z-Achse gedreht.

Vorzugsweise werden auf Objektvorlagen basierende Objekte jeweils mit

- einer Funktion zur Erstellung einer Vorschau bei einem Einfügen des jeweiligen Objekts in den Anlagenplan,
- einer Funktion zur Transformation des jeweiligen Objekts in den Anlagenplan entsprechend der durch einen Benutzer vorgebbaren Position und/oder Orientierung und

- einer Funktion zur Rückabwicklung eines Einfügevorgangs gekapselt. Dabei wird die Funktion zur Erstellung der Vorschau bei Erstellung einer der jeweiligen Objektvorlage entsprechenden Kopie ausgeführt, während die Funktion zur Transformation bei Positionierung der jeweiligen Objektkomponenten im Anlagenplan ausgeführt wird. Die Funktion zur Rückabwicklung wird bei einem Löschen eines auf einer Objektvorlage basierenden Objekts aus dem Anlagenplan ausgeführt. Somit ist stets eine definierte Bearbeitung von Objekten gewährleistet, die auf Objektvorlagen basieren.

**Patentansprüche**

1. Verfahren zum Betrieb eines Engineering-Systems für ein industrielles Prozessautomatisierungssystem, bei dem

   - Komponenten des industriellen Prozessautomatisierungssystems jeweils durch ein computerbasiertes Objekt innerhalb des Engineering-Systems (100) repräsentiert und in zumindest einer Server-seitigen Datenbank (103) des Engineering-Systems persistent gespeichert werden,
   - die Objekte Server-seitig innerhalb einer hierarchischen Objektstruktur mit mehreren Hierarchieebenen verwaltet werden, wobei die Objektstruktur Abhängigkeiten zwischen Objekten und/oder Objektkomponenten umfasst,
   - für ein Einfügen von mehrere Objektkomponenten (11-13) umfassenden Objekten in einen dreidimensionalen Anlagenplan (2) Objektvorlagen (1) bereitgestellt werden, die jeweils eine dreidimensionale Repräsentierung der Objektkomponenten, einen Lagebezug der Objektkomponenten zu einem Referenzobjekt (10) und eine dreidimensionale Repräsentierung des Referenzobjekts umfassen,
   - bei einem Einfügen eines auf einer Objektvorlage basierenden Objekts in einen dreidimensionalen Anlagenplan eine der jeweiligen Objektvorlage entsprechende Kopie erstellt wird, die anhand eines Abbilds (10') des Referenzobjekts entsprechend einer durch einen Benutzer vorgebbaren Position und/oder Orientierung dreidimensional im Anlagenplan angeordnet wird, wobei Abbilder (11'-13') der Objektkomponenten entsprechend dem Lagebezug zum Referenzobjekt im Anlagenplan positioniert werden.

2. Verfahren nach Anspruch 1,
   bei dem der Lagebezug der Objektkomponenten zum Referenzobjekt jeweils eine relative Position und/oder Orientierung der jeweiligen Objektkomponente zum jeweiligen Referenzobjekt umfasst, bei dem aus dem Referenzobjekt (10) und dessen Abbild (10') im Anlagenplan (2) eine Abbildung des jeweiligen auf einer Objektvorlage (1) basierenden Objekts in den Anlagenplan ermittelt wird und bei dem die Abbilder (11'-13') der Objektkomponenten (11-13) auf Basis der ermittelten Abbildung dreidimensional im Anlagenplan angeordnet werden.

3. Verfahren nach Anspruch 2,
   bei dem eine Position und Orientierung des Referenzobjekts (10) innerhalb eines Objekt-individuellen Koordinatensystems durch eine vierdimensionale Matrix spezifiziert werden, die eine die Orientierung des Referenzobjekts kennzeichnende dreidimensionale Matrix, einen die Position des Referenzobjekts innerhalb des Objekt-individuellen Koordinatensystems kennzeichnenden Verschiebungsvektor und einen transponierten Nullvektor umfasst, und bei dem eine Position und Orientierung des Abbilds (10') des Referenzobjekts im Anlagenplan (2) durch eine vierdimensionale Matrix spezifiziert werden, die eine die Orientierung des Abbilds innerhalb des Anlagenplans kennzeichnende dreidimensionale Matrix, einen die Position des Abbilds innerhalb des Anlagenplans kennzeichnenden Verschiebungsvektor und einen transponierten Nullvektor umfasst.

4. Verfahren nach Anspruch 3,
   bei dem eine Position und Orientierung der Objektkomponenten (11-13) innerhalb des Objekt-individuellen Koordinatensystems jeweils durch eine vierdimensionale Matrix spezifiziert werden, die eine die Orientierung der jeweiligen Objektkomponente kennzeichnende dreidimensionale Matrix, einen die Position der jeweiligen Objektkomponente innerhalb des Objekt-individuellen Koordinatensystems kennzeichnenden Verschiebungsvektor und einen transponierten Nullvektor umfasst, und bei dem eine Position und Orientierung von Abbildern (11'-13') der Objektkomponenten im Anlagenplan (2) jeweils durch eine vierdimensionale Matrix spezifiziert werden, die eine die Orientierung des jeweiligen Abbilds innerhalb des Anlagenplans kennzeichnende dreidimensionale Matrix, einen die Position des jeweiligen Abbilds innerhalb des Anlagenplans kennzeichnenden Verschiebungsvektor und einen transponierten Nullvektor umfasst.

5. Verfahren nach einem der Ansprüche 2 bis 4,
   bei dem die Abbildung des jeweiligen auf einer Objektvorlage (1) basierenden Objekts in den Anlagenplan (2) durch eine vierdimensionale Matrix spezifiziert wird, die eine dreidimensionale Matrix für eine lineare Transformation, insbesondere Drehung, einen Verschiebungsvektor und transponierten Nullvektor umfasst, und bei dem die vierdimensionale Matrix für die Abbildung als Produkt aus einer invertierten vierdimensionalen Matrix für das Referenzobjekt (10) und aus der vierdimensionalen Matrix für das Abbild (10') des Referenzobjekts berechnet wird.

6. Verfahren nach Anspruch 5,
bei dem aus einem Produkt der vierdimensionalen Matrix für die Abbildung und der vierdimensionalen Matrix für die jeweilige Objektkomponente jeweils die vierdimensionale Matrix für das Abbild (11'-13') der jeweiligen Objektkomponente (11-13) im Anlagenplan (2) berechnet wird.

7. Verfahren nach einem der Ansprüche 1 bis 6,
bei dem bei einem Einfügen eines auf einer Objektvorlage basierenden Objekts in den Anlagenplan zunächst nur Umrisse der Objektkomponenten in einer Vorschau dargestellt werden, bei dem das Referenzobjekt nach einer abgeschlossenen Anordnung des jeweiligen Objekts im Anlagenplan aus dessen Darstellung ausgefiltert wird und bei dem eine Darstellung der Vorschau nach der Anordnung des jeweiligen Objekts im Anlagenplan beendet wird.

8. Verfahren nach Anspruch 7,
bei dem die Vorschau in zumindest einer zweidimensionalen Ansicht gerendert wird.

9. Verfahren nach einem der Anspruch 1 bis 8,
bei dem auf Objektvorlagen basierende Objekte jeweils eine hierarchische, die jeweiligen Objektkomponenten umfassende Objektstruktur aufweisen und bei dem bei einem Einfügen eines auf einer Objektvorlage basierenden Objekts in den Anlagenplan eine Kopie der jeweiligen Objektkomponenten im Anlagenplan mit derselben hierarchischen Objektstruktur wie in der jeweiligen Objektvorlage erstellt wird.

10. Verfahren nach einem der Ansprüche 1 bis 9,
bei dem auf Objektvorlagen basierende Objekte bei einem Einfügen in den Anlagenplan jeweils an bestehenden Objekten im Anlagenplan ausgerichtet und/oder an diesen angeordnet werden, sofern ein vorgegebener Abstandsschwellwert unterschritten wird, und bei dem eine hierarchische Objektstruktur eines eingefügten Objekts bei einem Ausrichten und/oder Anordnen an bestehenden Objekten unverändert bleibt.

11. Verfahren nach einem der Ansprüche 1 bis 10,
bei dem auf Objektvorlagen basierende Objekte jeweils mit einer Funktion zur Erstellung einer Vorschau bei einem Einfügen des jeweiligen Objekts in den Anlagenplan, mit einer Funktion zur Transformation des jeweiligen Objekts in den Anlagenplan entsprechend der durch einen Benutzer vorgebbaren Position und/oder Orientierung und mit einer Funktion zur Rückabwicklung eines Einfügevorgangs gekapselt werden, bei dem die Funktion zur Erstellung der Vorschau bei Erstellung einer der jeweiligen Objektvorlage entsprechenden Kopie ausgeführt wird, bei dem die Funktion zur Transformation bei Positionierung der jeweiligen Objektkomponenten im Anlagenplan ausgeführt wird und bei dem die Funktion zur Rückabwicklung bei einem Löschen eines auf einer Objektvorlage basierenden Objekts aus dem Anlagenplan ausgeführt wird.

12. Verfahren nach einem der Ansprüche 1 bis 11,
bei dem Objektvorlagen in einer Objektbibliothek des Engineering-Systems verwaltet werden.

13. Steuerungsprogramm zum Betrieb eines Engineering-Systems für ein industrielles Prozessautomatisierungssystem, wobei das Steuerungsprogramm in einen Arbeitsspeicher eines Rechners ladbar ist und zumindest einen Codeabschnitt aufweist, bei dessen Ausführung

- Komponenten des industriellen Prozessautomatisierungssystems jeweils durch ein computerbasiertes Objekt innerhalb des Engineering-Systems (100) repräsentiert und in zumindest einer Server-seitigen Datenbank (103) des Engineering-Systems persistent gespeichert werden,
- die Objekte Server-seitig innerhalb einer hierarchischen Objektstruktur mit mehreren Hierarchieebenen verwaltet werden, wobei die Objektstruktur Abhängigkeiten zwischen Objekten und/oder Objektkomponenten umfasst,
- für ein Einfügen von mehrere Objektkomponenten (11-13) umfassenden Objekten in einen dreidimensionalen Anlagenplan (2) Objektvorlagen (1) bereitgestellt werden, die jeweils eine dreidimensionale Repräsentierung der Objektkomponenten, einen Lagebezug der Objektkomponenten zu einem Referenzobjekt (10) und eine dreidimensionale Repräsentierung des Referenzobjekts umfassen,

- bei einem Einfügen eines auf einer Objektvorlage basierenden Objekts in einen dreidimensionalen Anlagenplan eine der jeweiligen Objektvorlage entsprechende Kopie erstellt wird, die anhand eines Abbilds (10') des Referenzobjekts entsprechend einer durch einen Benutzer vorgebbaren Position und/oder Orientierung dreidimensional im Anlagenplan angeordnet wird, wobei Abbilder (11'-13') der Objektkomponenten entsprechend dem Lagebezug zum Referenzobjekt im Anlagenplan positioniert werden,

wenn das Steuerungsprogramm im Rechner abläuft.

## FIG 1

## FIG 2

FIG 3

FIG 4

Europäisches
Patentamt

European
Patent Office

Office européen
des brevets

# EUROPÄISCHER RECHERCHENBERICHT

**Nummer der Anmeldung**

EP 22 18 6660

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 3 364 257 A1 (SIEMENS AG [DE]) 22. August 2018 (2018-08-22) * Anspruch 1 * ----- | 1-13 | INV. G05B19/418 |
| Y | US 8 120 618 B2 (HAO MING C [US]; DAYAL UMESHWAR [US] ET AL.) 21. Februar 2012 (2012-02-21) * Abbildungen 2,4A * * Anspruch 1 * * Spalte 1, Zeile 9 - Zeile 12 * * Spalte 4, Zeile 20 - Zeile 25 * * Spalte 5, Zeile 9 - Zeile 10 * ----- | 1-13 | |
| Y | EP 2 669 763 B1 (BOEING CO [US]) 4. Mai 2022 (2022-05-04) * Absatz [0036] - Absatz [0037] * ----- | 3-6 | |
| Y | EP 3 690 575 A1 (SIEMENS AG [DE]) 5. August 2020 (2020-08-05) * Abbildung 1 * ----- | 7,8 | |
| Y | US 6 417 865 B1 (BOU ROBERT E [US]) 9. Juli 2002 (2002-07-09) * Spalte 1, Zeile 44 - Zeile 54 * * Seite 4, Zeile 4 - Zeile 29 * ----- | 9-11 | **RECHERCHIERTE SACHGEBIETE (IPC)** G05B |

Der vorliegende Recherchenbericht wurde für alle Patentansprüche erstellt

| Recherchenort | Abschlußdatum der Recherche | Prüfer |
|---|---|---|
| Den Haag | 23. Dezember 2022 | Lorenzo Barreiro, M |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 6660

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-12-2022

| Im Recherchenbericht angeführtes Patentdokument | Datum der Veröffentlichung | Mitglied(er) der Patentfamilie | Datum der Veröffentlichung |
|---|---|---|---|
| EP 3364257 A1 | 22-08-2018 | CN 108459569 A<br>EP 3364257 A1<br>US 2018239323 A1 | 28-08-2018<br>22-08-2018<br>23-08-2018 |
| US 8120618 B2 | 21-02-2012 | KEINE | |
| EP 2669763 B1 | 04-05-2022 | BR 102013013610 A2<br>CA 2807582 A1<br>CN 103456025 A<br>EP 2669763 A2<br>JP 6242591 B2<br>JP 2013250268 A<br>US 2013321391 A1 | 23-06-2015<br>01-12-2013<br>18-12-2013<br>04-12-2013<br>06-12-2017<br>12-12-2013<br>05-12-2013 |
| EP 3690575 A1 | 05-08-2020 | CN 113366397 A<br>EP 3690575 A1<br>US 2022101226 A1<br>WO 2020160855 A1 | 07-09-2021<br>05-08-2020<br>31-03-2022<br>13-08-2020 |
| US 6417865 B1 | 09-07-2002 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2808749 B1
- EP 3364257 A1
- EP 3571555 B1
- EP 3690575 B1